# EUROPEAN PATENT APPLICATION

(11) **EP 3 065 337 A1**
(43) Date of publication of application: **07.09.2016**
(21) Application number: 13896607.2
(22) Date of filing: 08.11.2013
(51) Int. Cl.: H04L 12/12, H04M 11/02

(54) **SYSTEM FOR MONITORING DOOR USING DOOR PHONE**

(30) Priority: 28.10.2013 KR 20130128395
(71) Applicant: Honesttechnology Co., Ltd., Daejeon 305-330 (KR)
(72) Inventor: LEE, Soo Woo, Daejeon 305-770 (KR)
(74) Representative: Ter Meer Steinmeister & Partner
(86) International application number: PCT/KR2013/010112
(87) International publication number: WO 2015/064812

(57) **Abstract**

The present invention relates to a remote door monitoring system using a door phone. The remote door monitoring system using a door phone includes: an electronic door lock in an RF communication scheme; a door phone device which transmits a taken image to a router and transmits a door opening or closing signal to the electronic door lock; a wireless router which relays data communication between the door phone device and a remote management server; a user mobile terminal which displays an image taken by the door phone device and provides a remote door opening and closing function; and a remote management server which transmits image data received from the wireless router to the user mobile terminal in real time, and transmits a door opening control signal received from the user mobile terminal to the wireless router. According to the invention, it is possible to transmit the image taken by the door phone to the user mobile terminal only by connection setting between the door phone and the wireless router without any additional cost, and thus there is an effect of significantly reducing an installation cost.

## Description

### Technical Field

The present invention relates to a door monitoring system using a door phone, and more specifically, to a technique of remotely streaming an external image taken by a door phone through a wireless router in real time, to allow a user to remotely confirm the external image taken by the door phone.

### Background Art

In a currently provided door phone system, when a visitor rings a bell of a door phone at each home, a camera installed outdoor takes an image of the visitor, the taken image is displayed through an indoor monitor, and a user visually confirms the visitor through the image displayed on the monitor and then may selectively open the door.

Such a door phone system has a problem that there is no method capable of confirming a visitor as well as confirming whether a visitor visits when a user goes out. In order to solve such a problem, a remote-controllable door phone system in which a user remotely confirms an image of a visitor and can control opening and closing of the door was proposed.

In Korean Laid-Open Patent No. 2005-0054611, a technique is disclosed in which a visitor image taken by a camera provided in a door phone unit is compressed and then transmitted to a mobile phone of a use through a CDMA modem to allow the user to confirm the visitor even outdoors, and a user can control locking of an electronic lock installed in the door by inputting a specific key provided on the mobile phone.

However, the conventional technique has a problem that high communication costs are necessary since a modem has to be used, and cannot be used in constant monitoring since a visitor image is transmitted only when the visitor visits and rings a door bell.

Meanwhile, a technique of remotely providing an image taken by a door phone to a user terminal through the internet by using a home network system such as Korean Laid-Open Patent No. 2006-0097844 was proposed, but such a technique has a problem that a system configuration is complicated and it cannot be applied in an environment in which a home network is not constructed.

### Disclosure

### Technical Problem

The invention is a technique proposed to solve such a problem, and an object of the invention is for a user to remotely confirm an external image taken by a door phone in real time by using only a wireless router provided normally in the house without an additional configuration by remotely streaming, in real time, the external image taken by the door phone through the wireless router.

### Technical solution

According to a preferred aspect of the invention to achieve the object described above, there is provided a remote door monitoring system using a door phone, including: an electronic door lock device which is installed in a door and opens or closes the door by a second wireless communication scheme; a door phone device which is installed on one side of the door, and includes a camera which takes an image outside the door, an encoder which encodes the image taken by the camera, a first wireless communication module which performs data communication by a first wireless communication scheme, a second wireless communication module which generates a second wireless communication signal for opening the door and transmits the second wireless communication signal to the electronic door lock, and a controller which generates control signals for taking an image, transmitting an image, and opening the door; a wireless router which is installed in the house, transmits image data received from the door phone device through first wireless communication, to a remote management server through the internet, transmits a door opening signal received from the remote management server, to the door phone device; a user mobile terminal which displays the image taken by the door phone device and provides a remote door opening and closing function; and a remote management server which is connected to the wireless router through the internet, transmits and stores, when image data is received from the wireless router, the image data in real time to the user mobile terminal, and transmits, when a door opening control signal is received from the user mobile terminal, the door opening control signal to the wireless router.

### Advantageous Effects

According to the invention, it is possible to transmit an image taken by a door phone to a user mobile terminal only by connection the door phone and a wireless router without any additional cost, an installation cost is significantly reduced, anyone can easily connect and use the door phone and the wireless router, and user convenience is maximized.

### Brief Description of Drawings

The above and other objects, features and advantages of the present invention will be more apparent from the following detailed description taken in conjunction with the accompanying drawings, in which:
Figure 1 is a diagram illustrating a configuration of a door monitoring system using a door phone according to the invention;
Figure 2 is a block diagram illustrating an inner configuration of the door phone illustrated in Figure 1;
Figure 3 is a diagram illustrating a configuration of a door monitoring system using a door phone according to a modified embodiment of the invention;
Figure 4 is a diagram for explaining a concept of setting a door phone network by using a user mobile terminal; and
Figure 5 is a flowchart illustrating a process of setting a door phone network by using a user mobile terminal.

### Best Mode

### Mode for Invention

Description about the invention is merely an embodiment for structural or functional description, and thus it should not be interpreted that the scope of right of the invention is limited by the embodiment described in text. In other words, embodiments may be variously modified and may have various types, and thus it should be understood that the scope of right of the invention includes equivalents capable of realizing a technical spirit. In addition, an object or an advantage described in the invention does not means that a specific embodiment has to include all of them or has to include only such an advantage, and thus it should that be understood that the scope of right of the invention is limited thereby.

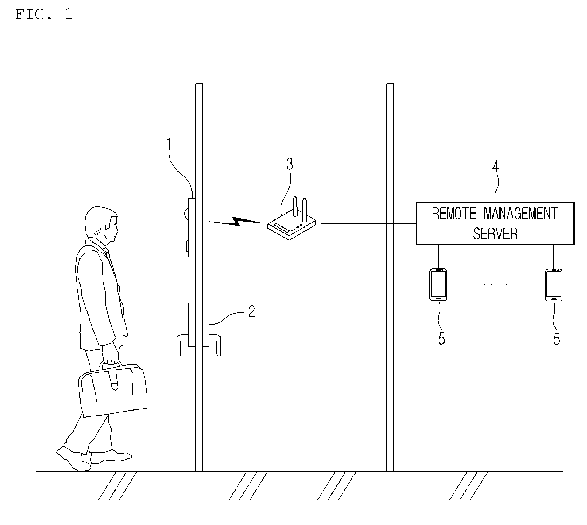

Figure 1 is a diagram illustrating a configuration of a door monitoring system using a door phone according to the invention.

As illustrated in Figure 1, the door monitoring system using a door phone according to the invention comprises: a door phone device 1, an electronic door lock 2, a wireless router 3, a remote management server 4, and a user mobile terminal 5.

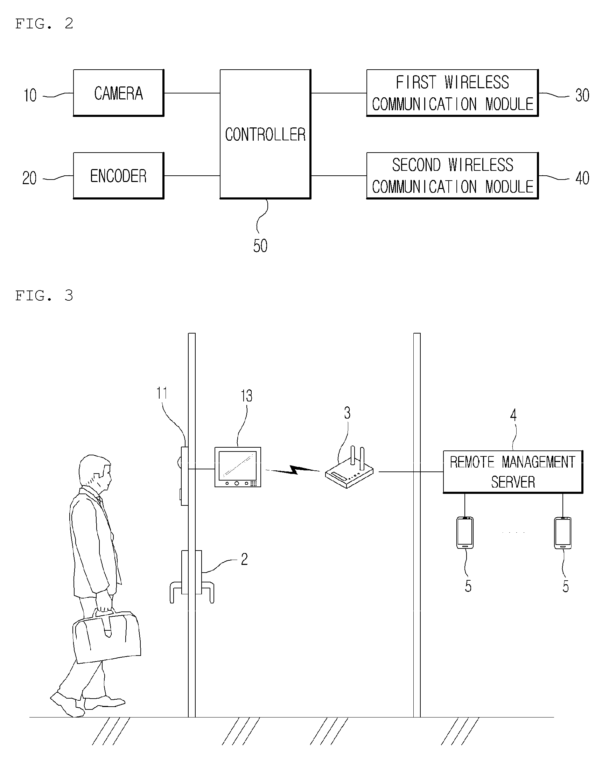

The door phone device 1 is installed on a door or the like of a housing to allow a visitor to communicate with an indoor user. The invention has one feature of additionally having a configuration for transmitting an image taken by the general door phone device 1 to a remote place and a configuration for opening a door. A detailed configuration will be described in Figure 2.

The electronic door lock 2 is installed on one side of a door, and opens or closes the door by using digitalized information such as a password, a semiconductor chip, a smart card, and a fingerprint instead of the existing key. In the invention, an RF-type electronic door lock which opens or closes the door by using a password or an RF signal is used.

The wireless router 3 plays a role in which multiple terminals share one IP address to access the internet. When an IP address (authorized IP address) assigned from an internet service provider is set in a router and then each terminal is connected to the router, a unique IP address is automatically assigned to each terminal and thus the terminals can simultaneously access the internet. In the invention, the wireless router 3 means a device which supports wireless connection through Wi-Fi in addition to wired connection of a terminal.

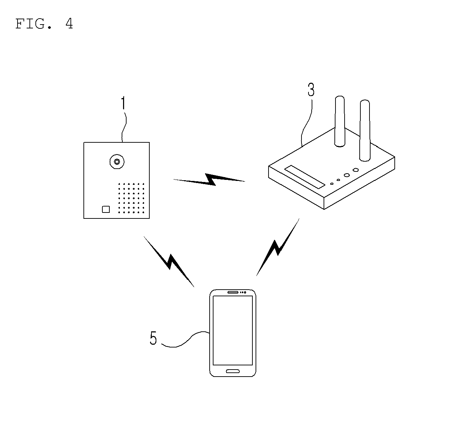

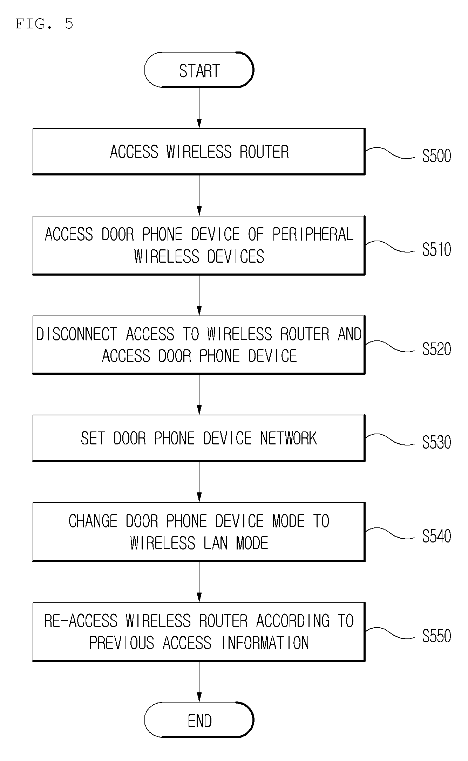

In the invention, the wireless router 3 is operated as a kind of gate way, and performs a function of transmitting an image taken by the door phone device 1 to an external remote management server 4. To this end, connection setting between the door phone device 1 and the wireless router 3 is necessary, and a method of easily connecting the door phone device 1 to the wireless router 3 will be described in detail with reference to Figure 4 and Figure 5.

The remote management server 4 is connected to the wireless router 3 and the user mobile terminal 5 through the internet network, transmits and stores, when image data is received from the wireless router 3, the image data to the user mobile terminal 5, and transmits, when a door opening control signal is received from the user mobile terminal 5, the door opening control signal to the wireless router 3.

The user mobile terminal 5 is a portable communication terminal carried by a user, displays an image taken by the door phone device, and transmits, when a specific key for opening the door is input by the user, the input to the door phone device 1 through the remote management server 4 to provide a remote door opening and closing function. The user mobile terminal 5 is preferably a mobile terminal such as a smartphone or a tablet PC, but may be a terminal such as a PC or a laptop other than the mobile terminal.

Figure 2 is a block diagram illustrating an inner configuration of the door phone device illustrated in Figure 1.

As illustrated in Figure 2, the door phone device 1 of the invention includes a camera 10 which takes an image outside the door, an encoder 20 which encodes the image taken by the camera 10, a first wireless communication module 30 which performs data communication by a first wireless communication scheme, a second wireless communication module 40 which generates a second wireless communication signal for opening the door and transmits the second wireless communication signal to the electronic door lock device, and a controller 50 which generates control signals for taking an image, transmitting the image, and opening the door.

An image time of imaging by the camera 10 may be different according to imaging modes. For example, the image modes may be classified into a bell-linked mode of starting image only when a visitor rings a bell, an outing imaging mode of performing imaging only when a user sets outing, and a constant imaging mode of constantly monitoring the outside of the door.

The encoder 20 encodes an electrical signal input from the camera 10 by compression algorithm such as MPEG, MPEG4, and H.264, and includes an event detection block (not illustrated) which detects whether motion occurs according to the image processing result. The event detection block can determine whether an event occurs on the basis of variation between n-th image data and (n-1)-th image data input from the camera 10. In other words, the event detection block analyzes an image signal input from the image sensor module 11 for each frame, and determines that an event occurs when variation between a previous frame and a current frame exceeds preset reference variation.

The first wireless communication scheme may be various wireless communication schemes such as Wi-Fi, Zigbee, and Z-wave, but is preferably a Wi-Fi scheme used most generally.

Since it is exemplified that the electronic door lock 2 is the RF-type electronic door lock, the second wireless communication scheme is preferably RF communication.

It is not efficient to transmit all the taken images to the remote management server 4 or the user mobile terminal 5 while the camera 10 is operated in the constant imaging mode. Accordingly, in the constant imaging mode, it is preferable to transmit the image to the remote management server 4 or the user mobile terminal 5 only when an event occurs.

To this end, the controller 50 stores an image of an event occurrence section when an event is detected in a taken image through the encoder 20 in a state where the camera 10 is operated in the constant imaging mode, extracts the stored event occurrence section image, and transmits the image to the remote management server 4 through the wireless router 3. In this case, it is preferable that the remote management server 4 transmits the received event occurrence section image to the user mobile terminal 5 in real time for a user to immediately recognize the event occurrence fact.

Alternatively, the controller 50 may transmit, when an event is detected in a taken image in a state where the camera is operated in the constant imaging mode, event occurrence time point information and storage request command data to the remote management server 4 through the wireless router 3. In this case, the remote management server 4 preferably stores the event occurrence section image on the basis of the event occurrence time point information, and then transmits the image to the user mobile terminal 5 for the user to immediately recognize the event occurrence fact. In this case, the event occurrence time point information may include event start time point information and event disappearance time point information.

### [Embodiments]

Figure 3 is a diagram illustrating a configuration of a door monitoring system using a door phone according to a modified embodiment of the invention.

In the modified embodiment illustrated in Figure 3, an indoor unit which is installed indoors performs a function such as an encoding process of a taken image or wireless transmission of an image. In other words, the general door phone device includes an outdoor unit which is installed outside a door and includes a camera, a bell, a microphone, and a speaker, and an indoor unit (so-called wall pad) which is installed on an indoor wall and includes a microphone, a speaker, and a display unit. In the embodiment, the encoder, the first wireless communication module, and the controller are installed in an indoor unit.

In the embodiment, the indoor unit 13 encodes, when receiving a taken image from the outdoor unit 11, the image, transmits the image to the remote management server 4 through the wireless router 3, and transmits, when receiving a door opening control signal through the wireless router 3, the door opening control signal to the outdoor unit 11. The outdoor unit 11 transmits an RF signal type door opening control signal to the electronic door lock 2 through the second wireless communication module 20 to open the door.

Figure 4 is a diagram for explaining a concept of setting a door phone network by using a user mobile terminal.

The door phone device 1 has a soft AP function capable of changing a wireless LAN card to a wireless AP (router), and can be operated in three kinds of modes of an Ethernet mode for wired network connection, a wireless LAN mode of being operated as a Wi-Fi client for wireless network connection, and a soft AP mode to operate the first wireless communication module 30 as a virtual wireless router.

In order to operate the first wireless communication module 30 in the soft AF mode, an SSID and a password of the door phone device 1 are necessary. In the invention, it is preferable to set the SSID of the door phone device 1 in a form of camera-xxx to recognize the door phone device 1 in the user mobile terminal 5. Herein, xxx may be generated by using a Wi-Fi MAC address of the door phone device 1, and the password may be a fixed value or may be generated by modifying the SSID value. In other words, in order for the user mobile terminal 5 to access the door phone device 1 in the soft AP mode of the door phone device 1, the user mobile terminal 5 should be able to know the SSID and the password of the door phone device 1. Accordingly, it is necessary to store rule information for a manner of setting the SSID and the password in the user mobile terminal 5 in advance.

The user mobile terminal 5 may be any communication terminal which satisfies two conditions that an application for setting a wireless network of the door phone device 1 and an SSID and a password of the wireless router 3 are stored with a history of accessing the wireless router 3.

Figure 5 is a flowchart illustrating a process of setting a door phone network by using the user mobile terminal. An operation illustrated in Figure 5 represents, when an application installed in the user mobile terminal is executed, a signal process and a control process performed in the user mobile terminal by the application.

First, in an initial state (S500) where the user mobile terminal 5 accesses the wireless router 3, when the application is executed, the user mobile terminal 5 searches peripheral wireless devices, and determines whether there is the door phone device 1 around (S510). The user mobile terminal 5 analyzes SSIDs of the peripheral wireless devices, determines whether an SSID including strings related to a camera, and can find the door phone device 1 positioned around.

If the door phone device 1 is searched around the user mobile terminal 5, the user mobile terminal 5 disconnects the access to the wireless router 3, and accesses the door phone device 1 (S520). To this end, as described above, the initial mode of the door phone device 1 has to be the soft AP mode, and information about a setting rule of the SSID and the password of the door phone device 1 has to be stored in the user mobile terminal 5.

When the user mobile terminal 5 accesses the door phone device 1 through the soft AP function, the user mobile terminal 5 sets a network of the door phone device 1 (S530). The setting of the network of the door phone device 1 mainly includes a process of setting an SSID and a password of the wireless router 3 and a process of setting an ID and a password for internet access. As described above, since the user mobile terminal 5 recognizes the SSID and the password of the wireless router 3 that is the network setting information of the wireless router 3 through the previous access to the wireless router 3, the user mobile terminal 5 transmits the SSID and the password to the door phone device 1 and displays a screen for inputting the ID and the password for internet access, to allow a user to input the ID and the password. When the user inputs the ID and the password through the screen of a smartphone, the smartphone transmits the input ID and password to the door phone device 1, to input the SSID and the password of the wireless router 3 and the ID and the password for internet access, to the network setting information of the door phone device 1.

When the network setting of an IP camera is completed, the user mobile terminal 5 changes the operation mode of the door phone device 1 from the soft AP mode to the wireless LAN mode (S540).

When the operation mode of the door phone device 1 is changed to the wireless LAN mode, the door phone device 1 accesses the wireless router 3 by using the stored network setting values, and can transmit a taken image to a PC or a smart phone of the user through the internet.

Lastly, the user mobile terminal 5 is disconnected from the door phone device 1 due to the change of the operation mode of the door phone device 1, and thus accesses the wireless router 3 again on the basis of the previous access information (S540).

While the present invention has been described with respect to the specific embodiments, it will be apparent to those skilled in the art that various changes and modifications may be made without departing from the spirit and scope of the present invention as defined in the following claims.

### Industrial Applicability

According to the invention, it is possible to transmit an image taken by a door phone to a user mobile terminal only by connection the door phone and a wireless router without any additional cost, an installation cost is significantly reduced, anyone can easily connect and use the door phone and the wireless router, and user convenience is maximized, which is very useful industrially.

## Claims

1. A remote door monitoring system using a door phone, comprising:
an electronic door lock device which is installed in a door and opens or closes the door by a second wireless communication scheme;
a door phone device which is installed on one side of the door, and includes a camera which takes an image outside the door, an encoder which encodes the image taken by the camera, a first wireless communication module which performs data communication by a first wireless communication scheme, a second wireless communication module which generates a second wireless communication signal for opening the door and transmits the second wireless communication signal to the electronic door lock, and a controller which generates control signals for taking an image, transmitting an image, and opening the door;
a wireless router which is installed in the house, transmits image data received from the door phone device through first wireless communication, to a remote management server through the internet, transmits a door opening signal received from the remote management server, to the door phone device;
a user mobile terminal which displays the image taken by the door phone device and provides a remote door opening and closing function; and
a remote management server which is connected to the wireless router through the internet, transmits and stores, when image data is received from the wireless router, the image data in real time to the user mobile terminal, and transmits, when a door opening control signal is received from the user mobile terminal, the door opening control signal to the wireless router.

2. The remote door monitoring system using a door phone according to Claim 1, wherein the door phone device includes an outdoor unit which is installed outdoors and an indoor unit which is installed indoors, and at least one of the encoder, the first wireless communication module, and the controller is installed in the indoor unit.

3. The remote door monitoring system using a door phone according to Claim 1, wherein the first wireless communication scheme is any one of Wi-Fi, Zigbee, and Z-wave, and the second wireless communication scheme is RF communication.

4. The remote door monitoring system using a door phone according to Claim 1, wherein the controller stores, when the camera is in a constant imaging mode and an event is detected in the taken image through the encoder, an event occurrence section image, and transmits the stored event occurrence section image to the remote management server through the wireless router, and
wherein the remote management server transmits the received event occurrence section image to the user mobile terminal in real time.

5. The remote door monitoring system using a door phone according to Claim 1, wherein the controller transmits, when the camera is in a constant imaging mode and an event is detected in the taken image through the encoder, event occurrence time point information and storage request command data to the remote management server through the wireless router, and
wherein the remote management server stores an event occurrence section image on the basis of the event occurrence time point information, and then transmits the event occurrence section image to the user mobile terminal.

6. The remote door monitoring system using a door phone according to Claim 1, wherein the wireless communication module is a Wi-Fi module, and
wherein the user mobile terminal sets connection between the door phone device and the wireless router through a soft AP function.

7. The remote door monitoring system using a door phone according to Claim 6, wherein the user mobile terminal accesses the wireless router through a wireless LAN function, searches SSIDs of wireless devices positioned around, disconnects, when the door phone device is searched, the access to the wireless router, accesses the door phone device, transmits a preset SSID and password of the wireless router to the door phone device, performs a network setting operation of the door phone device, and then changes an operation mode of the door phone device from a soft AP mode to a wireless LAN mode.
